Europäisches Patentamt

European Patent Office

Office européen des brevets

(11) Veröffentlichungsnummer: **0 054 977**
A1

## (12) EUROPÄISCHE PATENTANMELDUNG

(21) Anmeldenummer: **81110779.6**

(22) Anmeldetag: **05.12.81**

(51) Int. Cl.³: **G 03 B 29/00, B 08 B 15/00**

(30) Priorität: **15.12.80 DE 8033306 U**

(43) Veröffentlichungstag der Anmeldung: **30.06.82**
Patentblatt 82/26

(84) Benannte Vertragsstaaten: **IT**

(71) Anmelder: **Röhm GmbH, Kirschenallee Postfach 4242, D-6100 Darmstadt 1 (DE)**

(72) Erfinder: **Moskovits, Francisc, Atzelbergstrasse 9, D-6000 Frankfurt/M. (DE)**

(54) Fotografische Raumüberwachungseinrichtung in Personenkraftwagen.

(57) Die Erfindung betrifft eine fotografische Raumüberwachungseinrichtung in Personenkraftwagen und anderen zu sichernden Räumen mit einer Sicherungsvorrichtung gegen Fremdeingriff, mit einem Gehäuse (1, 2) und mit einer fotografischen Aufnahmevorrichtung (6), wobei das fest montierte und zweiteilig ausgestaltete Gehäuse (1, 2) auf der Frontseite zumindest teilweise lichtdurchlässig ausgestaltet ist und innerhalb des Gehäuses (1, 2) Kamera-Halterungselemente (9, 10) vorgesehen sind und dass im Gehäuse (1, 2) mindestens ein Betätigungselement (44, 46) enthalten ist, das bei geschlossenem Gehäuse (1, 2) in seine Arbeitsstellung überführt ist.

0054977

G 80 33 306.8

09.03.81, 10-vf-ni
CW 2488.4 MC, 0337C

Beschreibungseinleitung

Fotografische Raumüberwachungseinrichtung in Personenkraftwagen

Die Erfindung betrifft eine fotografische Raumüberwachungseinrichtung in Personenkraftwagen* mit einer Sicherungsvorrichtung gegen Fremdeingriff mit einem Gehäuse und mit einer
fotografischen Aufnahmeeinrichtung.

Aus der US-PS 3 349 679 ist eine solcher fotografische Überwachungseinrichtung bekannt. Die bekannte Raumüberwachungseinrichtung enthält eine Spezialkamera, welche in einem
abschließbaren Gehäuse an der Decke eines Pkw's angeordnet
ist. Des weiteren ist eine Blitzlichtvorrichtung vorgesehen,
um das Autoinnere auszuleuchten. Die Überwachungseinrichtung
enthält einen Steuerkreis zur Betätigung der Kamera, welcher
durch das Öffnen und Schließen der Pkw-Türen eingeschaltet
wird. Die Steuerschaltung wird beim Öffnen der Pkw-Tür vorbereitet und beim Schließen derselben wirksam. Im Bedarfsfall wird eine Verzögerungsschaltung wirksam, die nach einer
vorgegebenen Zeit nach Schließen der Tür die Kamera und
Blitzlichtvorrichtung auslöst. Bei diesen Kameras handelt es
sich um komplizierte Spezialkameras, die als Antriebsvorrichtung einen Federmotor aufweisen, der mittels einer von
außen zugänglichen Handhabe aufziehbar ist.

* und anderen zu sichernden Räumen

CW 2488.4 MC — 2 — 0054977

Demgegenüber liegt der Erfindung die Aufgabe zugrunde, eine fotografische Raumüberwachungseinrichtung der eingangs genannten Art zu schaffen, die einfach aufgebaut ist, sicher verriegelbar sein soll und bei der keine von außen zugängliche Handhaben vorgesehen sein sollen. Die Raumüberwachungseinrichtung soll bei geringem Aufwand preiswert herstellbar sein.

Erfindungsgemäß wird die Aufgabe dadurch gelöst, daß das Gehäuse, das fest montierbar und zweiteilig ausgestaltet ist, auf der Frontseite zumindest teilweise lichtdurchlässig ausgebildet ist, daß innerhalb des Gehäuses Kamerahalterungselemente vorgesehen sind und daß im Gehäuse mindestens ein Betätigungselement enthalten ist, das bei geschlossenem Gehäuse in seine Arbeitsstellung überführt ist. Hierdurch ist der Vorteil gegeben, daß mit Hilfe eines außerhalb des Gehäuses vorgesehenen Schalters der Stromkreis für den Kameramotor in einfacher Weise schließbar ist, wodurch der Motorstromkreis der Kamera geschlossen wird und zumindest eine Aufnahme getätigt wird. Da bei geschlossenem Gehäuse der Auslöser durch ein Betätigungselement in seiner betätigten Stellung gehalten wird, sind in vorteilhafter Weise keine von außen zu betätigenden mechanischen Mittel notwendig. Bei auf Serienbetrieb geschalteter fotografischer Kamera können beliebig viele Aufnahmen gemacht werden, und zwar in Abhängigkeit von der Betätigungsdauer des externen Schalters.

Gemäß weiterer Ausbildung ist in der Gehäusefrontseite ein Weitwinkelobjektiv, insbesondere ein sogenannter "Türspion" angeordnet. Dieser "Türspion" fluchtet mit dem Strahlengang des Objektivs der eingesetzten Motorkamera.

Gemäß weiterer Ausgestaltung ist das Betätigungselement im Gehäuseoberteil vorgesehen. Hieraus ergibt sich der Vorteil, daß beim Aufsetzen des Gehäuseoberteiles auf das Gehäuseunterteil das Betätigungselement zwangsläufig in seine Arbeitsstellung überführt wird und hierbei der Kameraauslöser in die Arbeitsstellung gebracht wird.

Gemäß weiterer Ausgestaltung ist das Betätigungselement beweglich angeordnet, wobei am Betätigungselement eine Betätigungsfeder angreift. In vorteilhafter Weise wird mit Hilfe der Betätigungsfeder der Kameraauslöser in seine Arbeitsstellung überführt, da die Kraft der Betätigungsfeder zumindest gleich der Auslösekraft des Kameraauslösers ist. Hierdurch ergibt sich in der Anwendung und im Zusammenhang mit einer Kamera und mit einer außerhalb des Gehäuses befindlichen Batterie die Möglichkeit, im Kamerabatterieraum einen Anschlußadapter mit zwei nach außen geführten Anschlußleitungen vorzusehen.

Wird eine Motorkamera mit innerhalb des Kameragehäuses befindlicher Batterie verwendet, so wird zwischen der Stirnseite der Batterie und dem zugeordneten Kontaktelement ein scheibenartiges Zwischenteil vorgesehen, das aus einem Isoliermittelteil und zwei beidseitig angeordneten leitenden Belägen oder Schichten versehen ist, wobei von den leitenden Belägen oder Schichten jeweils eine Anschlußleitung nach außen geführt ist. Hierdurch ergibt sich der weitere Vorteil, daß ohne mechanischen Eingriff in den Aufbau bzw. die Konstruktion der Kamera eine externe Ein- und Ausschaltung des Kamerastromkreises möglich ist.

CW 2488.4 MC                    - 4 -                    0054977

Zusätzlich kann innerhalb des Gehäuses eine Timer-Schaltung, vorzugsweise ein monostabiler Multivibrator mit mittels einer Handhabe vorwählbarer Zeitkonstante vorgesehen sind, durch welche ein Relais beeinflußbar ist, durch dessen Kontakt die kameraseitigen elektrischen Teile be- und entstrombar sind, wobei vom Eingang der Timer-Schaltung, vorzugsweise über eine Stecker-Kupplungs-Verbindung zumindest eine zweiadrige Leitung zu einer extern angeordneten Signaltaste führt.

Bei Verwendung einer Kamera, bei der auf der Gehäuseoberseite neben dem Auslöser eine zwei Arbeitsstellungen aufweisende Drucktaste für Serienaufnahmen vorgesehen ist, ist gemäß einer anderen, besonders vorteilhaften Ausgestaltung ein Betätigungselement vorgesehen, das in einer gehäusefesten Halterung beweglich gelagert ist, wobei am Betätigungselement eine Feder angreift, gegen deren Kraft das Betätigungselement wegbewegbar ist und wobei die Kraft der Feder einen Mindestwert aufweist. Hierdurch wird in vorteilhafter Weise erreicht, daß beim Einfügen der Kamera in die Halterung zunächst das Betätigungselement entgegen der Federkraft wegbewegt wird und dann mit der Seriendrucktaste in Berührung kommt. Die Seriendrucktaste wird mit Hilfe des Betätigungselementes nach unten bewegt und entriegelt. Beim weiteren Einfügen der Kamera in die Halterung wird die Seriendrucktaste durch das Betätigungselement freigegeben. Sie bewegt sich nach oben in ihre Serienaufnahmen ermöglichende Arbeitsstellung. Sodann kommt beim weiteren Einfügen der Kamera in die Halterung das Betätigungselement mit dem Kameraauslöser in Wirkverbindung. Der Kameraauslöser wird mit Hilfe des Betätigungselementes in seine Arbeitsstellung überführt. Ist also die Kamera in die Halterung eingebracht, sind sowohl die Serientaste als auch der Auslöser zwangsläufig in ihre Arbeitsstellung überführt worden.

Gemäß weiterer Ausbildung weist das Betätigungselement eine Steuer- bzw. Auflaufschräge auf.

Gemäß einer vorteilhaften Ausgestaltung weisen die beiden Gehäuseteile im Bereich ihrer Überlappungen miteinander fluchtende Ausnehmungen zur Aufnahme je eines Steckschlosses auf.

In vorteilhafter Weise ist die Gehäuseunterseite mit Bohrungen zur Aufnahme von Befestigungselementen versehen. Gemäß weiterer Ausbildung weist die Gehäusefrontseite einen Fensterbereich auf. Dieser Fensterbereich ist an die Größe des eingebauten oder ansetzbaren Blitzgerätes angepaßt.

Gemäß einer anderen vorteilhaften Ausgestaltung ist das Befestigungselement ein Gewindeteil, das auf einem Bügel der Kamerahalterung vorgesehen ist. Dieser Bügel mit Befestigungselement dient gleichzeitig zur Lagefixierung der Kamera in der Halterung.   —

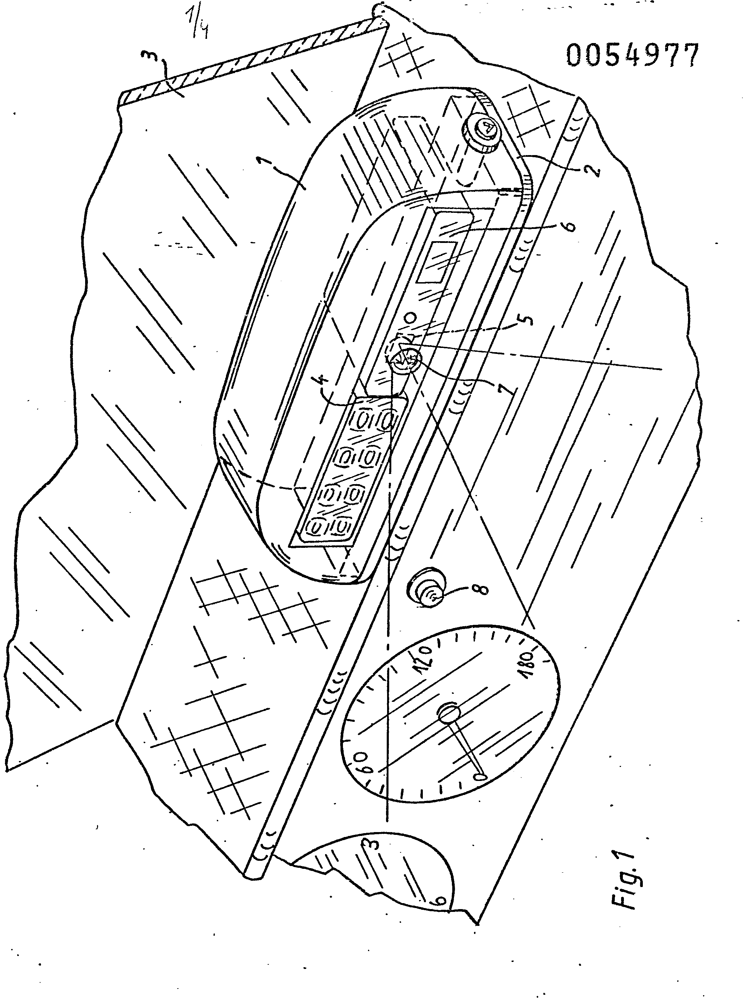

Im folgenden wird die Erfindung anhand eines in den Figuren 1 bis 5 dargestellten Ausführungsbeispieles beschrieben. Es zeigen:

Figur 1   in schematischer Darstellung eine fotografische Raumüberwachungseinrichtung im Bereich der Frontscheibe eines Pkw's,

0054977

Figur 2
und 2a      eine Explosionsdarstellung der fotografischen
           Raumüberwachungseinrichtung,

Figur 3      eine perspektivische Explosionsdarstellung des Ge-
           häuseunterteiles der fotografischen Raumüberwa-
           chungseinrichtung mit den auf ihm vorgesehenen
           Teilen,

Figur 4      eine perspektivische, schematische Darstellung
           einer Zeitschaltung und

Figur 5      einen Querschnitt durch eine Halterung für eine
           mit einer Seriendrucktaste versehene Motor-Kamera.

Gemäß Figur 1 ist ein zweiteiliges Kunststoffgehäuse 1 und 2
im Inneren eines Pkw's unmittelbar hinter der Frontscheibe 3
angeordnet. Auf der Stirnseite des Gehäuseoberteiles 1 ist
ein in etwa rechteckförmiger Fensterbereich 4 vorgesehen,
welcher lichtdurchlässig ausgebildet ist. Fluchtend mit der
optischen Achse des Objektives 5 einer Kamera 6 ist ein sogenannter "Türspion" 7 als Weitwinkelobjektiv vorgesehen.
Mit 8 ist eine Alarmtaste bezeichnet.

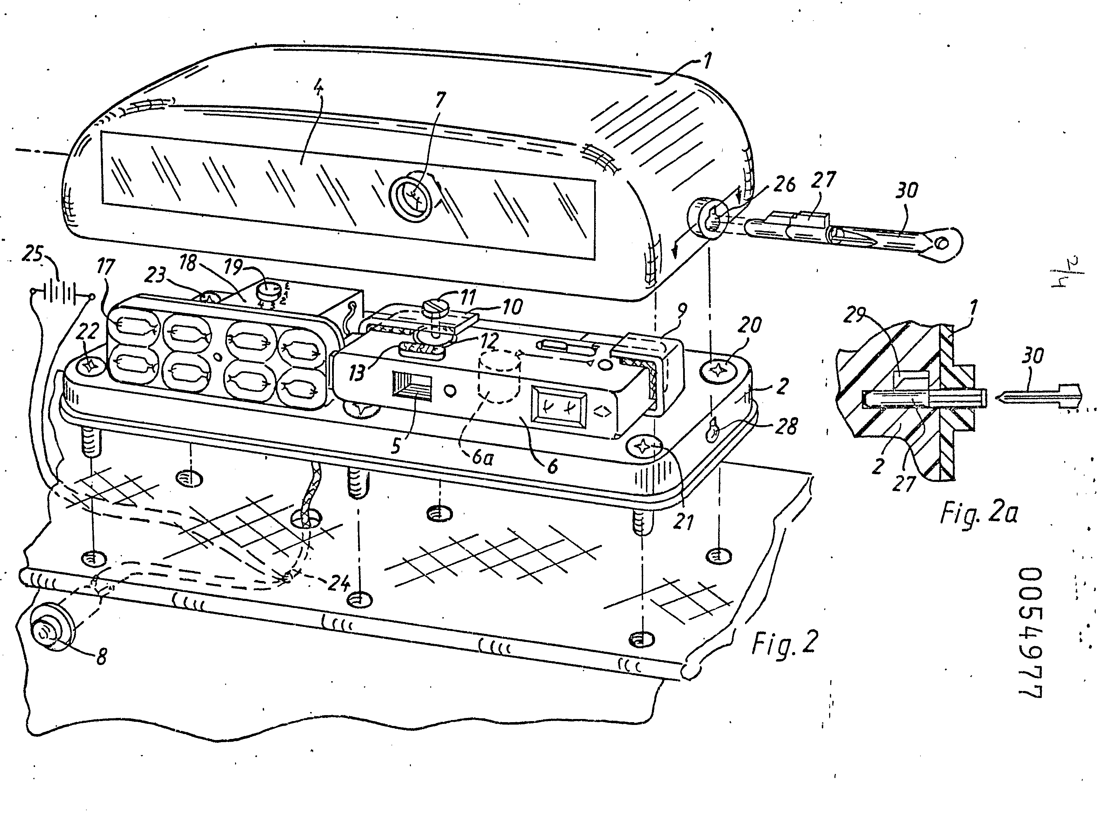

In Figur 2 sind die den Teilen gemäß Figur 1 entsprechenden
Teile mit gleichen Bezugszeichen versehen. Die fotografische
Kamera 6 wird durch auf dem Gehäuseunterteil 2 vorgesehene
Halterungen 9 und 10 gehalten. Mit 11 ist eine Stellschraube
bezeichnet, die bei in die Halterungen 9 und 10 eingebrachter Kamera 6 in ihre Arbeitsstellung überführt wird und
hierbei den mit 12 bezeichneten Auslöser betätigt. In nicht
dargestellter Weise ist innerhalb der fotografischen Kamera 6 ein Elektromotor vorgesehen, durch den einerseits der
Film weitertransportierbar ist und durch den andererseits

0054977

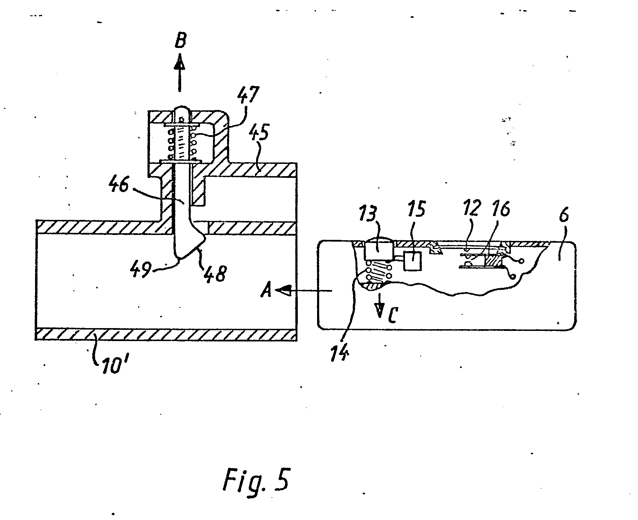

nach jeder Aufnahme der Verschluß erneut gespannt wird. Mit
13 ist eine Serientaste bezeichnet, die zwei Arbeitsstellungen aufweist. In der gedrückten Stellung können mit Hilfe
der fotografischen Kamera Einzelaufnahmen durchgeführt werden. Bei nach oben ausgerückter Serientaste 13 befindet sich
diese in der zweiten Arbeitsstellung für Serienbildaufnahmen. Die Serientaste 13 wird aus ihrer ersten Arbeitsstellung in die zweite (ausgerückte Arbeitsstellung) durch
einfaches Drücken überführt. Hierbei wird die Serientaste
entrastet und kann sich mit Hilfe einer an ihr angreifenden
Feder in die ausgerückte Stellung bewegen. Gemäß Figur 5
greift an der Serientaste 13 eine Druckfeder 14 an. Die
Serientaste ist mit einem Rastelement 15 verbunden. Unterhalb des Membranauslösers 12 befindet sich ein Schalter 16.

Auf die Kamera ist eine Blitzlampenanordnung 17 aufgesteckt.
Mit 18 ist eine Timer-Relais-Schaltung bezeichnet, deren
Zeitwirkung durch eine Handhabe 19 einstellbar ist.

Mit 20, 21, 22, 23 sind Schrauben bezeichnet, mit deren Hilfe das Gehäuseunterteil mit dem Gehäuse des Pkw's verbunden
wird.

Vom Alarmdruckschalter 8 führt eine elektrische Leitung 24
zum Gehäuseinneren. Desgleichen führt eine Leitung von der
Autobatterie 25 in das Innere des Gehäuses 1, 2.

Das Gehäuseoberteil ist an den sich gegenüberliegenden
Schmalseiten mit einer Öffnung 26 für ein Steckschloß 27
versehen. Am Gehäuseunterteil ist an den entsprechenden
Stellen eine zugeordnete Öffnung 28 vorhanden. Diese weist
eine Hinterdrehung 29 auf, um eine sichere Verriegelung des
Steckschlosses 27 zu ermöglichen. Mit 30 der zugeordnete
Steckschlüssel bezeichnet.

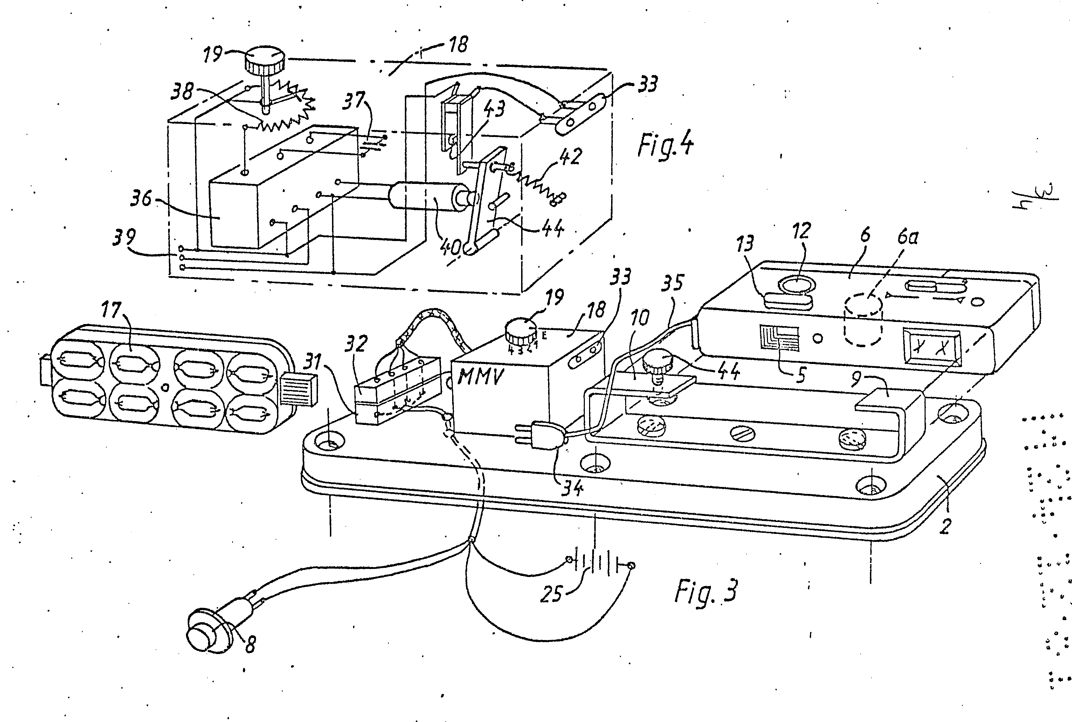

In Figur 3 sind die den Teilen gemäß Figur 1 und 2 entsprechenden Teile mit gleichen Bezugszeichen versehen. Auf dem Gehäuseunterteil 2 ist eine Steckerverbindung 31, 32 vorgesehen, die den Alarmschalter 8 und die Batterie 25 mit der sogenannten Timer-Auslöseschaltung 18 verbindet. Diese Timer-Schaltung 18 weist eine Anschlußfassung 33 für einen Stecker 34 auf, von dem eine Leitung 35 zur Kamera 6 führt.

Gemäß Figur 4 besteht die Timer-Schaltung 18 aus einem monostabilen Multivibrator 36, dessen zeitbestimmendes Glied einen Kondensator 37 und einen veränderbaren Widerstand 38 aufweist. Der Widerstand 38 ist mit Hilfe der Drehknopfhandhabe 19 veränderbar. Der mit 39 bezeichnete Steuereingang des Multivibrators 36 ist mit dem Alarmschalter 8 verbindbar. Vom Ausgang des Multivibrators führen zwei Leitungen zu der Spule 40 eines Relais, dessen Anker 41 unter der Wirkung einer Feder 42 steht und mit dessen Hilfe ein Schalter 43 betätigbar ist. Mit Hilfe des Schalters 43 ist der Minuspol der Batterie 25 mit einem Anschluß der Steckerfassung 33 verbindbar. Der andere Anschluß der Steckerfassung 33 ist direkt mit dem Pluspol der Batterie 25 verbunden.

Bei Betätigung der Alarmtaste 8 erhält der monostabile Multivibrator 36 einen Steuerimpuls, der die Bestromung des Relais 40 veranlaßt und damit die Schließung des Schalters 43. Während einer vorgegebenen Zeitdauer, die abhängig ist von der Stellung des Drehknopfes 19 bleibt das Relais 40 bestromt und damit der Schalter 43 geschlossen. Während dieser Zeit ist der nicht dargestellte Motor in der Kamera 6 bestromt und veranlaßt die Durchführung einer vorgegebenen Anzahl von Aufnahmen.

Bei in die Fassung bzw. Halterung 9 und 10 eingeschobener Kamera 6 ist eine mit 44 bezeichnete Betätigungsschraube soweit nach unten geschraubt, daß sich der Kameraauslöser 12
in der gedrückten Stellung befindet. Auf diese Weise kann
der Verschluß der Kamera allein durch das Betätigen der
Alarmtaste 8 mit Hilfe des eingebauten Motors beliebig oft
betätigt werden, ohne daß hierbei nach außen geführte mechanische Betätigungsmittel erforderlich sind.

Anstelle der in Figur 3 gezeigten Betätigungsschraube 44 ist
eine Betätigungsvorrichtung gemäß Figur 5 möglich, die den
besonderen Vorteil aufweist, daß beim Einschieben bzw. Einfügen der Kamera in die Halterungen 9 und 10 die Serientaste 13 und der Auslöser 12 automatisch betätigt werden.

Die mit 10' bezeichnete Halterung weist einen bügelartigen
Aufsatz 45 auf, in dem ein Betätigungselement 46 beweglich
gelagert ist. Dieser Betätigungsstift 46 steht unter der
Wirkung einer Feder 47, deren Kraft größer ist als die Kraft
der Feder 14 der Serientaste 13 und größer als die Betätigungskraft des Auslösers 12. Dieser Betätigungsstift 46
weist eine Steuerschräge 48 auf, die so geneigt ist, daß der
Stift 46 beim Einschieben der Kamera in Pfeilrichtung A in
die Halterung 10' mühelos in Pfeilrichtung B bewegbar ist.
Der Betätigungsstift 46 weist benachbart zur Steuerschräge 48 einen gerundeten Betätigungsbereich 49 auf.

Beim Einschieben der Kamera 6 in die Halterung 10' wird
durch die Stirnkante der Kamera über die Steuerschräge 48
der Betätigungsstift 46 in Pfeilrichtung B bewegt. Beim weiteren Einschieben gelangt der Kopf 49 des Betätigungsstiftes 46 in Wirkverbindung mit der Serientaste 13 und drückt
diese in Pfeilrichtung C. Hierbei wird die Serientaste 13
über das Teil 15 entriegelt bzw. entkuppelt. Beim weiteren
Einschieben der Kamera wird die Wirkverbindung zwischen Betätigungsstift 46 und Serientaste 13 aufgehoben, so daß die-

0054977

se unter der Wirkung ihrer Feder 14 sich entgegen der Pfeilrichtung C in die Arbeitsstellung für Serienaufnahmen bewegt.

Sodann gelangt beim weiteren Einschieben der Kamera der Betätigungsstift 46 mit seinem Betätigungskopf 49 in Wirkverbindung mit dem Auslöser 12. Der Auslöser 12 wird betätigt und in seiner betätigten Stellung gehalten. Durch diese Maßnahme wird zwangsläufig erreicht, daß die fotografische Kamera auf Serienbetrieb geschaltet wird und daß außerdem mit Hilfe des gleichen Elementes der Auslöser in seine Arbeitsstellung überführt wird. Zum Herausnehmen der Kamera aus der Halterung 9, 10 wird diese in Pfeilrichtung A weitergeschoben.

0054977

G 80 33 306.8

09.03.81, 10-vf-ni
CW 2488.4 MC, 0337C

Ansprüche

1. Fotografische Raumüberwachungseinrichtung in Personenkraftwagen* mit einer Sicherungsvorrichtung gegen Fremdeingriff, mit einem Gehäuse und mit einer fotografischen Aufnahmeeinrichtung, dadurch gekennzeichnet, daß
das Gehäuse, das fest montierbar und zweiteilig ausgestaltet ist, auf der Frontseite zumindest teilweise
lichtdurchlässig (4) ausgebildet ist, daß innerhalb des
Gehäuses Kamera-Halterungselemente (9, 10) vorgesehen
sind und daß im Gehäuse (1, 2) mindestens ein Betätigungselement (44 bzw. 46, 46, 48, 49) enthalten ist,
das bei geschlossenem Gehäuse in seine Arbeitsstellung
überführt ist.

2. Fotografische Raumüberwachungseinrichtung nach Anspruch 1, dadurch gekennzeichnet, daß in dem Gehäuse
ein Weitwinkelobjektiv (7), insbesondere ein sogenannter "Türspion" angeordnet ist.

3. Fotografische Raumüberwachungseinrichtung nach Anspruch 1 oder 2, dadurch gekennzeichnet, daß das Betätigungselement im Gehäuseoberteil vorgesehen ist, * und anderen zu sichernden Räumen

4.  Fotografische Raumüberwachungseinrichtung nach einem
    der vorhergehenden Ansprüche, dadurch gekennzeichnet,
    daß das Betätigungselement beweglich angeordnet ist und
    daß am Betätigungselement eine Betätigungsfeder angreift.

5.  Fotografische Raumüberwachungseinrichtung nach einem
    der vorhergehenden Ansprüche, dadurch gekennzeichnet,
    daß ein Betätigungselement (46, 48, 49) vorgesehen ist,
    das an einer gehäusefesten Halterung (45) beweglich gelagert ist, daß am Betätigungselement (46) eine Feder (47) angreift, gegen deren Kraft das Betätigungselement (46) wegbewegbar ist und daß die Kraft der Feder (47) einen Mindestwert aufweist.

6.  Fotografische Raumüberwachungseinrichtung nach Anspruch 5, dadurch gekennzeichnet, daß das Betätigungselement (46) mit einer Steuer- bzw. Auflaufschräge (48)
    versehen ist.

7.  Fotografische Raumüberwachungseinrichtung nach einem
    der vorhergehenden Ansprüche, dadurch gekennzeichnet,
    daß die beiden Gehäuseteile (1, 2) im Bereich ihrer
    Überlappung miteinander fluchtende Ausnehmungen (26,
    28) zur Aufnahme je eines Steckschlosses (27) aufweisen.

8.  Fotografische Raumüberwachungseinrichtung nach einem
    der vorhergehenden Ansprüche, dadurch gekennzeichnet,
    daß die Gehäuseunterseite (2) mit Bohrungen zur Aufnahme von Befestigungselementen versehen ist.

9. Fotografische Raumüberwachungseinrichtung nach einem
   der Ansprüche 1 bis 4 oder 7 und 8, dadurch gekennzeichnet, daß das Befestigungselement ein Gewindeteil (11, 44) ist, das auf einem Bügel (10) der Kamerahalterung vorgesehen ist.

1/4

0054977

Fig. 1

√ 2488.4 PC/MC

G80 33 306

0054977

Fig. 2a

Fig. 2

CW 2488.4 PC/MC

G-XO 33 306.8

Fig.4

Fig. 3

0054977

0054977

Fig. 5

Europäisches
Patentamt

**EUROPÄISCHER RECHERCHENBERICHT**

0054977
Nummer der Anmeldung

EP 81 11 0779

## EINSCHLÄGIGE DOKUMENTE

| Kategorie | Kennzeichnung des Dokuments mit Argabe, soweit erforderlich, der maßgeblichen Teile | betrifft Anspruch |
|---|---|---|
| D/Y | <u>US - A - 3 349 679</u> (LOHMAN) | |
| | * Patentansprüche 1,2,4 * | 1,2 |
| | --- | |
| Y | <u>US - A - 3 752 047</u> (GORDON) | |
| | * Spalte 2, Zeile 36 bis Spalte 3, Zeile 25 * | 1 |
| | --- | |
| A | <u>DE - B - 1 167 575</u> (ROBOT BERNING & Co.) | |
| | * Spalte 2, Zeile 34 bis Spalte 3, Zeile 25 * | 1 |
| | -------- | |

**KLASSIFIKATION DER ANMELDUNG (Int. Cl.³)**

G 03 B 29/00
G 08 B 15/00

**RECHERCHIERTE SACHGEBIETE (Int Cl.³)**

G 03 B 29/00
G 08 B 15/00
        13/00
G 08 G  1/10
B 60 R 11/04

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 12.02.1982 | MEES |

EPA form 1503.1  06.78